# FASCICULE DE BREVET EUROPEEN

(11) **EP 0 926 047 B1**
(45) Date de publication et mention de la délivrance du brevet: **17.07.2002**
(21) Numéro de dépôt: 98402896.9
(22) Date de dépôt: 20.11.1998
(51) Int. Cl.: B62D 21/02, B62D 33/02

(54) **Châssis de véhicule, notamment de semiremorque, comportant deux longerons pourvus de crevés pour la réception de traverses**
Rahmen für ein Kraftfahrzeug , insbesondere für einen Sattelzug , zwei Längsträger mit Öffnungen für Querträgerbefestigung enthaltend
Frame for a motor vehicle , especially for semitrailer , comprising longitudinal beams with holes for mounting transversal beams

(30) Priorité: 17.12.1997 FR 9716023
(43) Date de publication de la demande: 30.06.1999
(73) Titulaire: S.E.G. (société anonyme), 85200 Fontenay-Le-Comte (FR)
(72) Inventeur: Reus, Pierre, 85200 Fontenay-le-Comte (FR)
(74) Mandataire: Lemoine, Robert

(56) Documents cités:
- DE-U- 9 304 926
- FR-A- 2 441 530
- US-A- 3 926 530
- US-A- 4 674 770

## Description

La présente invention concerne un châssis de véhicule, notamment de semi-remorque, comportant deux longerons reliés par une traverse avant, une traverse arrière et au moins une traverse intermédiaire, les longerons comportant au moins un crevé ménageant une ouverture et une patte perpendiculaire à l'ouverture, la traverse intermédiaire étant enfilée dans les ouvertures des crevés des longerons et fixée aux pattes de ces crevés par des moyens de fixation amovibles conventionnels.

Les châssis des semi-remorques et des véhicules similaires sont généralement réalisés par la mise en oeuvre de techniques assurant un assemblage global de leurs éléments constitutifs.

Ces techniques ne donnent toutefois pas pleinement satisfaction. Elles nécessitent en effet l'exécution d'opérations relativement longues et compliquées par une main-d'oeuvre souvent qualifiée et donc chère.

Par ailleurs, l'expérience montre que lorsque l'assemblage des éléments constitutifs est réalisé de manière globale, les réparations à effectuer à la suite d'accidents sont difficiles et coûteuses.

DE 93 04 926 U décrit un châssis de véhicule ayant la structure mentionnée au premier paragraphe ci-dessus.

Ce châssis est stable et léger. Cependant, comme la fixation des pattes des longerons à la traverse intermédiaire est assurée uniquement à l'aide de rivets, elle ne peut résister à des chocs violents survenant lors d'accidents.

La présente invention se propose de remédier à cet inconvénient et, pour ce faire, elle a pour objet un châssis de véhicule du type de celui décrit dans DE 93 04 926 U et qui est caractérisé en ce que les pattes comportent chacune au moins une fente dans laquelle fait saillie un ergot porté par la traverse intermédiaire et réalisé par une opération de formation de crevé.

Les traverses peuvent ainsi être fixées aux longerons de façon plus solide et plus sûre.

Selon un mode de réalisation particulier de l'invention, la traverse intermédiaire est constituée par un profilé en U dont la base est appliquée contre les pattes des crevés des longerons.

Un contact intime entre la traverse intermédiaire et les pattes des crevés est ainsi garanti, ce qui permet une fixation encore plus sûre.

Par ailleurs, la traverse intermédiaire peut avantageusement porter une plaquette à chacune de ses extrémités libres, deux rives parallèles aux longerons étant fixées par des moyens de fixation amovibles conventionnels aux plaquettes de la traverse intermédiaire.

On conçoit aisément que ces plaquettes facilitent le montage des rives.

Selon un mode de réalisation préféré, les rives sont constituées par des profilés en U dont la base est appliquée contre les plaquettes de la traverse intermédiaire et sont également fixées aux extrémités libres des traverses avant et arrière par d'autres moyens de fixation amovibles conventionnels.

Selon un autre mode de réalisation préféré, les longerons sont constitués par deux profilés en I portant une plaquette à chacune de leurs extrémités libres, les traverses avant et arrière étant fixées par des moyens de fixation amovibles conventionnels aux plaquettes des longerons.

Le châssis de véhicule selon l'invention se caractérise en outre en ce qu'il comporte au niveau de sa partie antérieure une structure d'attelage comprenant deux poutres s'étendant entre les longerons et parallèlement à ceux-ci, ces poutres étant fixées à la traverse avant par l'une de leurs extrémités et comportant au voisinage de leur autre extrémité au moins un crevé ménageant une ouverture et une patte perpendiculaire à celle-ci, une autre traverse intermédiaire étant enfilée dans les ouvertures ménagées dans les poutres ainsi que dans les ouvertures d'autres crevés ménagés dans les longerons, et étant fixée par des moyens de fixation amovibles conventionnels aux pattes des crevés correspondants.

D'autres caractéristiques et avantages du châssis de véhicule conforme à l'invention ressortiront de la description qui sera donnée ci-après à titre d'exemple nullement limitatif en référence aux dessins annexés dans lesquels :
- la figure 1 est une vue en perspective d'un châssis de véhicule conforme à l'invention ;
- la figure 2 est une vue en perspective éclatée du châssis visible sur la figure 1 ;
- la figure 3 est une vue à échelle agrandie de la partie de châssis située dans le cercle III de la figure 1 ;
- la figure 4 est une vue analogue à la figure 3 mais montrant la traverse intermédiaire avant sa fixation ; et

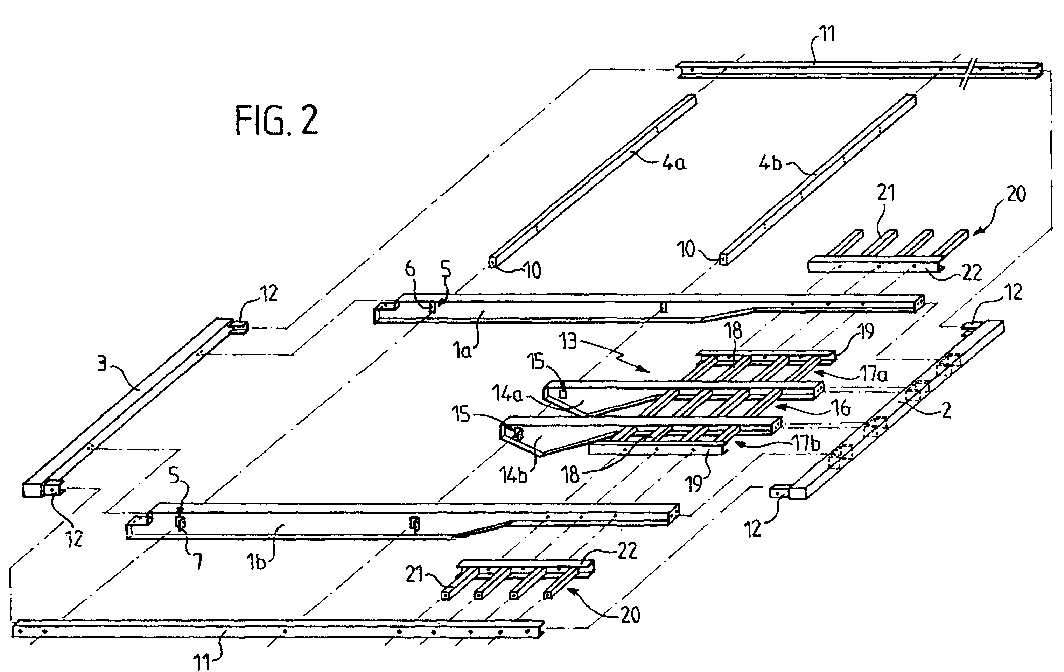

- la figure 5 est une vue à échelle agrandie de la partie du châssis située dans le cercle V de la figure 1.

Le châssis que l'on peut voir sur les dessins a été conçu pour constituer une semi-remorque, mais rien ne s'oppose à ce qu'il soit utilisé sur un camion ou tout autre véhicule similaire.

Il comprend tout d'abord deux longerons parallèles 1a,1b reliés par une traverse avant 2, une traverse arrière 3 et deux traverses intermédiaires 4a,4b.

Les longerons 1a,1b sont constitués par deux profilés métalliques en I comportant chacun deux crevés 5 réalisés dans leur âme, ces crevés ménageant une ouverture 6 et une patte 7 pliée à angle droit.

Dans l'exemple représenté, les ouvertures sont rectangulaires tandis que les pattes sont solidaires de l'un de leurs côtés verticaux.

Il va de soi que l'on ne sortirait pas du cadre de la présente invention si les ouvertures avaient une autre forme ou si les pattes s'étendaient non pas verticalement mais horizontalement.

On précisera ici que les crevés du longeron 1a sont situés en face des crevés du longeron 1b et que les pattes 7 portées par l'un des longerons sont dirigées dans le sens inverse de celui des pattes de l'autre longeron, ce qui n'est toutefois pas obligatoire.

En référence à la figure 2, on précisera par ailleurs que les longerons 1a,1b portent une plaquette à chacune de leurs extrémités libres, ces plaquettes étant fixées de préférence par soudure.

Les traverses intermédiaires 4a,4b sont enfilées dans les ouvertures 6 des crevés 5 qui se font face et sont fixées aux pattes 7 correspondantes par des moyens de fixation amovibles conventionnels tels que des boulons et des écrous.

Elles sont constituées par des profilés en U disposés de telle sorte que la face externe de leur base soit appliquée contre les pattes 7 correspondantes.

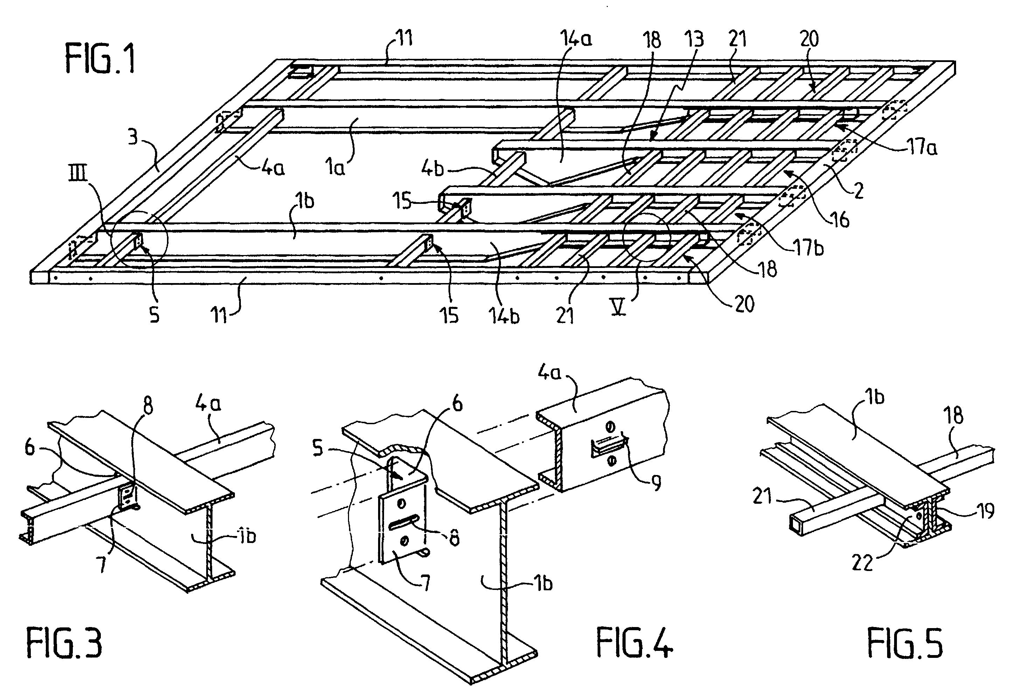

En se référant à la figure 4, on pourra constater que les pattes 7 des crevés sont pourvues d'une fente horizontale 8 recevant un ergot 9 porté par la traverse intermédiaire correspondante, cet ergot étant réalisé par une opération classique de formation de crevé.

Les traverses intermédiaires 4a,4b sont en outre pourvues, à chacune de leurs extrémités libres, d'une plaquette 10 (visible uniquement sur la figure 2) fixée par exemple par soudage.

Comme on peut le voir parfaitement sur le figure 1, deux rives 11 s'étendant parallèlement aux longerons 1a,1b sont fixées contre les plaquettes 10 qui sont situées d'un même côté, par des boulons et des écrous ou par tout autre moyen de fixation amovible conventionnel.

Les rives 11 sont constituées par des profilés en U s'appuyant contre les plaquettes 10 correspondantes par l'intermédiaire de la face interne de leur base. Leurs extrémités libres sont en outre fixées par des boulons et des écrous, ou des moyens de fixation équivalents, à des tenons 12 (visibles uniquement sur la figure 2) prévus aux extrémités des traverses avant 2 et arrière 3.

Comme le montre clairement la figure 2, les tenons 12 s'étendent perpendiculairement à ces traverses et sont constituées par des éléments en U dont les branches sont tournées vers les longerons 1a et 1b.

Le châssis de véhicule conforme à l'invention comporte également une structure d'attelage 13 au niveau de sa partie antérieure. La structure 13 comprend deux poutres 14a,14b situées entre les longerons 1a,1b et s'étendant parallèlement à ceux-ci.

Les poutres 14a,14b sont fixées à la traverse avant 2 par l'une de leurs extrémités et comportent au voisinage de leur autre extrémité un crevé 15 semblable aux crevés 5 des longerons.

La traverse intermédiaire 4b, enfilée dans les ouvertures des crevés des longerons qui sont les plus près de la traverse avant, est également enfilée dans les ouvertures des crevés 15 et est fixée aux pattes de ces derniers par des moyens de fixation amovibles conventionnels tels que des boulons et des écrous.

La structure d'attelage 13 comprend également un élément raidisseur 16 entre les poutres 14a,14b, un élément raidisseur 17a entre le longeron la et la poutre 14a et un élément raidisseur 17b entre la poutre 14b et le longeron 1b.

Dans le mode de réalisation présenté, les éléments raidisseurs comprennent des barreaux 18 reliés au niveau de leurs extrémités par des profilés en U 19 s'étendant parallèlement aux longerons et dont les branches sont tournées les unes vers les autres.

Les profilés en U 19 pourraient bien entendu être remplacés par de simples bandes métalliques. Ils sont fixés aux poutres et/ou aux longerons correspondants par des boulons et des écrous ou tout autre moyen de fixation équivalent.

On précisera que les barreaux peuvent être creux, une plaquette étant soudée à chacune de leurs extrémités pour permettre la mise en place des moyens de fixation ou être pleins, un taraudage étant alors réalisé dans chacune de leurs extrémités pour recevoir les boulons ou les vis de fixation utilisés.

Le châssis de véhicule conforme à l'invention comporte par ailleurs des rampes 20 au niveau de sa partie antérieure.

Ces rampes 20 ont la même structure que celle des éléments raidisseurs 16,17a,17b. En effet, elles comprennent des barreaux parallèles 21 reliés au niveau de leurs extrémités par des profilés en U 22 s'étendant parallèlement aux longerons et dont les branches sont tournées les unes vers les autres.

Les barreaux 21 peuvent être creux. Dans ce cas, une plaquette est soudée à chacune de leurs extrémités pour permettre la fixation des rampes aux longerons et aux rives correspondants.

Ils peuvent également être pleins et comporter un taraudage dans chacune de leurs extrémités pour recevoir les moyens de fixation de la rampe correspondante.

On notera ici que les profilés en U 22 pourraient être remplacés par de simples bandes métalliques. Dans certains cas, les profilés 22 qui sont directement fixés contre les rives 11 pourraient être supprimés, comme on peut le voir sur la figure 2. Dans d'autres cas, tous les profilés 22 pourraient être supprimés.

Enfin, on précisera que les longerons 1a,1b peuvent porter un plat (non représenté) sur leur face inférieure, entre les traverses intermédiaires 4a,4b. Ces plats, qui sont de préférence soudés, sont destinés à permettre la fixation des supports de suspension conventionnels (non représentés).

Bien que cela ne soit pas indiqué explicitement ci-dessus, l'homme de l'art aura compris que les éléments constitutifs du châssis de véhicule conforme à l'invention peuvent être en particulier métalliques et pourvus de trous aux emplacements adéquats pour permettre le passage des boulons et/ou des moyens de fixation équivalents utilisés.

Il ressort de la description ci-dessus que les éléments constitutifs du châssis de véhicule conforme à l'invention sont de constitution simple et faciles à réaliser et qu'ils peuvent être assemblés et démontés rapidement.

Ces avantages permettent d'abaisser de façon notable le prix de revient du châssis de véhicule et facilitent grandement les opérations de réparation à réaliser à la suite d'accidents.

## Revendications

1. Châssis de véhicule, notamment de semi-remorque, comportant deux longerons (1a,1b) reliés par une traverse avant (2), une traverse arrière (3) et au moins une traverse intermédiaire (4a), les longerons comportant au moins un crevé (5) ménageant une ouverture (6) et une patte (7) perpendiculaire à l'ouverture, tandis que la traverse intermédiaire (4a) est enfilée dans l'ouverture d'un crevé de chacun des longerons et fixée à la patte correspondante par des moyens de fixation amovibles conventionnels, **caractérisé en ce que** les pattes (7) comportent chacune au moins une fente (8) dans laquelle fait saillie un ergot (9) porté par la traverse intermédiaire (4a) et réalisé par une opération de formation de crevé.

2. Châssis selon la revendication 1, **caractérisé en ce que** la traverse intermédiaire (4a) est constituée par un profilé en U dont la base est appliquée contre les pattes (7) des crevés (5) des longerons (1a,1b).

3. Châssis selon la revendication 2, **caractérisé en ce que** la traverse intermédiaire (4a) porte une plaquette (10) à chacune de ses extrémités libres, deux rives (11) parallèles aux longerons (1a,1b) étant fixées par des moyens de fixation amovibles conventionnels aux plaquettes (10) de la traverse intermédiaire (4a).

4. Châssis selon la revendication 3, **caractérisé en ce que** les rives (11) sont constituées par des profilés en U dont la base est appliquée contre les plaquettes (10) de la traverse intermédiaire (4a) et sont également fixées aux extrémités libres des traverses avant (2) et arrière (3) par d'autres moyens de fixation amovibles conventionnels.

5. Châssis selon l'une quelconque des revendications précédentes, **caractérisé en ce que** les longerons (1a,1b) sont constitués par deux profilés en I portant une plaquette à chacune de leurs extrémités libres, les traverses avant (2) et arrière (3) étant fixées par des moyens de fixation amovibles conventionnels aux plaquettes des longerons.

6. Châssis selon l'une quelconque des revendications précédentes, **caractérisé en ce qu'**il comporte au niveau de sa partie antérieure une structure d'attelage (13) comprenant deux poutres (14a,14b) s'étendant entre les longerons (1a,1b) et parallèlement à ceux-ci, ces poutres étant fixées à la traverse avant (2) par l'une de leurs extrémités et comportant au voisinage de leur autre extrémité au moins un crevé (15) ménageant une ouverture et une patte perpendiculaire à celle-ci, une autre traverse intermédiaire (4b) étant enfilée dans les ouvertures ménagées dans les poutres (14a,14b) ainsi que dans les ouvertures (6) d'autres crevés (5) ménagés dans les longerons (1a,1b), et étant fixée par des moyens de fixation amovibles conventionnels aux pattes des crevés (5,15) correspondants.

7. Châssis selon la revendication 6, **caractérisé en ce que** les poutres (14a,14b) sont constituées par des profilés en I, portent une plaquette à leur extrémité mentionnée en premier et sont fixées à la traverse avant (2) par des moyens de fixation amovibles traversant leur plaquette.

8. Châssis selon la revendication 6 ou 7, **caractérisé en ce que** la structure d'attelage (13) comprend également un élément raidisseur (16) entre les poutres (14a,14b) et deux éléments raidisseurs (17a,17b) entre les poutres (14a,14b) et les longerons (1a,1b).

9. Châssis selon la revendication 8, **caractérisé en ce que** les éléments raidisseurs (16, 17a,17b) comprennent des barreaux (18) reliés au niveau de leurs extrémités par des profilés en U (19) s'étendant parallèlement aux longerons (1a,1b) et dont les branches sont tournées les unes vers les autres.

10. Châssis selon la revendication 9, **caractérisé en ce que** les profilés en U (19) des éléments raidisseurs (16,17a,17b) sont fixés aux poutres (14a,14b) et/ou aux longerons (1a,1b) par des moyens de fixation amovibles conventionnels.

11. Châssis selon l'une quelconque des revendications 3 à 10, **caractérisé en ce qu'**il comporte au niveau de sa partie antérieure des rampes (20) comprenant des barreaux parallèles (21) reliés par des profilés en U (22) s'étendant parallèlement aux longerons (1a,1b) et dont les branches sont tournées les unes vers les autres, les profilés (22) des rampes (20) étant fixés par des moyens de fixation amovibles conventionnels, respectivement aux longerons (1a,1b) et aux rives (11).

12. Châssis selon l'une quelconque des revendications 1, 3 à 7, 10 et 11, **caractérisé en ce que** les moyens de fixation amovibles sont des boulons et des écrous.

## Claims

1. A frame for a motor vehicle, especially for a semitrailer, comprising two longitudinal beams (1a, 1b), which are interconnected by a front crossbeam (2), a rear crossbeam (3) and at least one intermediate crossbeam (4a), the longitudinal beams having at least one hole (5) providing an opening (6) and a lug (7) perpendicular to the opening, and the intermediate crossbeam (4a) being inserted into the opening of a hole of each of the longitudinal beams and being secured to the respective lug by conventional removable fastening means, **characterized in that** the lugs (7) each comprise at least one slot (8), into which a tongue (9) carried by the intermediate crossbeam (4a) and formed by a hole punching operation is projecting.

2. The frame according to claim 1, **characterized in that** the intermediate crossbeam (4a) is comprised of a U-shaped profile, the base of which is applied against the lugs (7) of the holes (5) of the longitudinal beams (1a, 1b).

3. The frame according to claim 2, **characterized in that** the intermediate crossbeam (4a) carries a small plate (10) at each of its free ends, two edge members (11) parallel to the longitudinal beams (1a, 1b) being secured by conventional removable fastening means to the plates (10) of the intermediate crossbeam (4a).

4. The frame according to claim 3, **characterized in that** the edge members (11) are comprised of U-shaped profiles, the base of which is applied against the plates (10) of the intermediate crossbeam (4a), and are also secured to the free ends of the front crossbeam (2) and rear crossbeam (3) by further conventional removable fastening means.

5. The frame according to any of the preceding claims, **characterized in that** the longitudinal beams (1a, 1b) are comprised of two I-shaped profiles carrying a small plate at each of their free ends, the front (2) and rear (3) crossbeams being secured by conventional removable fastening means to the plates of the longitudinal beams.

6. The frame according to any of the preceding claims, **characterized in that**, at its front part, it comprises a towing structure (13) having two beams (14a, 14b) extending between and parallel to the longitudinal beams (1a, 1b), said beams being secured to the front crossbeam (2) with one of their ends and comprising in the vicinity of their other end at least one hole (15) providing an opening and a lug perpendicular thereto, a further intermediate-crossbeam (4b) being inserted into the openings provided in the beams (14a, 14b) as well as in the openings (6) of further holes (5) provided in the longitudinal beams (1a, 1b), and being secured by conventional removable fastening means to the lugs of the respective holes (5, 15).

7. The frame according to claim 6, **characterized in that** the beams (14a, 14b) are comprised of I-shaped profiles and carry a small plate at their first mentioned end, and **in that** they are secured to the front crossbeam (2) by removable fastening means extending through their plate.

8. The frame according to claim 6 or 7, **characterized in that** the towing structure (13) further comprises one stiffener (16) between the beams (14a, 14b) and two stiffeners (17a, 17b) between the beams (14a, 14b) and the longitudinal beams (1a, 1b).

9. The frame according to claim 8, **characterized in that** the stiffeners (16, 17a, 17b) comprise bars (18), which are interconnected at the ends thereof by U-shaped profiles (19) extending parallel to the longitudinal beams (1a, 1b) and having their legs facing each other.

10. The frame according to claim 9, **characterized in that** the U-shaped profiles (19) of the stiffeners (16, 17a, 17b) are secured to the beams (14a, 14b) and/or to the longitudinal beams (1a, 1b) by conventional removable fastening means.

11. The frame according to any of claims 3 to 10, **characterized in that**, at its front part, it comprises ramps (20) having parallel bars (21), which are interconnected by U-shaped profiles (22) extending parallel to the longitudinal beams (1a, 1b) and having their legs facing each other, the profiles (22) of the ramps (20) being secured by conventional removable fastening means to the longitudinal beams (1a, 1b) and edge members (11), respectively.

12. The frame according to any of claims 1, 3 to 7, 10 and 11, **characterized in that** the removable fastening means are bolts and nuts.

## Patentansprüche

1. Rahmen für ein Kraftfahrzeug, insbesondere einen Sattelzug, zwei Längsträger (1a,1b) umfassend, verbunden durch einen vorderen Querträger (2), einen hinteren Querträger (3) und wenigstens einen Zwischenquerträger (4a), wobei die Längsträger wenigstens eine Stechung (5) mit einem Stechloch (6) und einem zur Öffnung senkrechten Stechlappen (7) umfassen, während der Zwischenquerträger (4a) in dem Stechloch (6) jedes Längsträgers lagert und an dem entsprechenden Lappen durch herkömmliche entfernbare Befestigungsmittel befestigt ist,
**dadurch gekennzeichnet,**
**dass** jeder der Lappen (7) wenigstens einen Schlitz (8) umfasst, aus dem ein von dem Zwischenquerträger (4a) getragener Vorsprung (9) vorsteht, realisiert durch eine Stechoperation.

2. Rahmen nach Anspruch 1, **dadurch gekennzeichnet, dass** der Zwischenquerträger (4a) durch ein U-Profil gebildet wird, dessen Basis an den Lappen (7) der Stechungen (5) der Längsträger (1a,1b) anliegt.

3. Rahmen nach Anspruch 2, **dadurch gekennzeichnet, dass** der Zwischenquerträger (4a) an jedem seiner freien Enden ein Plättchen (10) trägt, wobei zwei Randleisten (11), parallel zu den Querträgern (1a,1b), durch herkömmliche entfernbare Befestigungseinrichtungen an den Plättchen (10) des Zwischenquerträgers (4a) befestigt sind.

4. Rahmen nach Anspruch 3, **dadurch gekennzeichnet, dass** die Randleisten (11) durch U-Profile gebildet werden, deren Basis an den Plättchen (10) des Zwischenquerträgers (4a) anliegt, und dass sie auch an den freien Enden des vorderen (2) und hinteren (3) Querträgers durch andere bzw. weitere herkömmliche entfernbare Befestigungsmittel befestigt sind.

5. Rahmen nach einem der vorhergehenden Ansprüche, **dadurch gekennzeichnet, dass** die Längsträger (1a,1b) durch zwei I-Profile gebildet werden, von denen jedes an jedem seiner freien Enden ein Plättchen trägt, wobei der vordere (2) und hintere (3) Querträger durch herkömmliche entfernbare Befestigungsmittel an den Plättchen der Längsträger befestigt sind.

6. Rahmen nach einem der vorangehenden Ansprüche, **dadurch gekennzeichnet, dass** er in Höhe seines vorderen Teils eine Kupplungsstruktur (13) enthält, zwei Balken (14a,14b) umfassend, die sich zwischen den Längsträgern (1a,1b) und parallel zu diesen erstrecken, wobei diese Balken mit einem ihrer Enden an dem vorderen Querträger (2) befestigt sind und in der Nähe ihres anderen Endes wenigstens eine Stechung (15) mit einem Loch und einem zu diesem Loch senkrechten Lappen umfassen, wobei ein weiterer Zwischenquerträger (4b) in den in den Balken (14a,14b) vorgesehenen Löchern sowie in den Löchern (6) der anderen, in den Längsträgern (1a,1b) vorgesehenen Stechungen (5) lagert und durch herkömmliche entfernbare Befestigungsmittel an den Lappen der entsprechenden Stechungen (5,15) befestigt ist.

7. Rahmen nach Anspruch 6, **dadurch gekennzeichnet, dass** die Balken (14a,14b) durch I-Profile gebildet werden, die an ihrem zuerst genannten Ende ein Plättchen tragen und an dem vorderen Querträger (2) durch entfernbare Befestigungsmittel, die ihr Plättchen durchqueren, befestigt sind.

8. Rahmen nach Anspruch 6 oder 7, **dadurch gekennzeichnet, dass** die Kupplungsstruktur (13) auch ein Versteifungselement (16) zwischen den Balken (14a,14b) und zwei Versteifungselemente (17a,17b) zwischen den Balken (14a,14b) und den Querträgern (1a,1b) umfasst.

9. Rahmen nach Anspruch 8, **dadurch gekennzeichnet, dass** die Versteifungselemente (16, 17a,17b) Stäbe (18) umfassen, die an ihren Enden durch U-Profile (19) verbunden sind, die sich parallel zu den Längsträgern (1a,1b) erstrecken und deren Flansche einander zugewandt sind.

10. Rahmen nach Anspruch 9, **dadurch gekennzeichnet, dass** die U-Profile (19) der Versteifungselemente (16,17a,17b) an den Balken (14a,14b) und/oder an den Längsträgem (1a,1b) durch herkömmliche entfernbare Befestigungsmittel befestigt sind.

11. Rahmen nach einem der Ansprüche 3 bis 10, **dadurch gekennzeichnet, dass** er an seinem hintern Teil Rampen bzw. Gestänge (20) enthält, parallele Stäbe (21) umfassend, verbunden durch U-Profile (22), die sich parallel zu den Längsträgern (1a,1b) erstrecken und deren Flansche einander zugewandt sind, wobei die Profile der Rampen bzw. Gestänge (20) durch herkömmliche entfernbare Befestigungsmittel jeweils an den Längsträgern (1a,1b) und an den Randleisten (11) befestigt sind.

12. Rahmen nach einem der Ansprüche 1, 3 bis 7, 10 und 11, **dadurch gekennzeichnet, dass** die entfernbaren Befestigungsmittel Durchsteckschrauben und Schraubenmuttern sind.
